Europäisches Patentamt

European Patent Office

Office européen des brevets

(11) Veröffentlichungsnummer: **0 352 397 B1**

## (12) EUROPÄISCHE PATENTSCHRIFT

(45) Veröffentlichungstag der Patentschrift: **07.01.93**

(21) Anmeldenummer: **88730167.9**

(22) Anmeldetag: **26.07.88**

(51) Int. Cl.⁵: **H02P 5/17**

(54) **Vorrichtung zum Regeln der Geschwindigkeit von pulsbreitenmodulierten Elektromotoren, insbesondere von Gleichstrommotoren.**

(43) Veröffentlichungstag der Anmeldung:
**31.01.90 Patentblatt 90/05**

(45) Bekanntmachung des Hinweises auf die Patenterteilung:
**07.01.93 Patentblatt 93/01**

(84) Benannte Vertragsstaaten:
**AT BE CH DE FR GB IT LI NL**

(56) Entgegenhaltungen:
**EP-A- 0 065 927**
**EP-A- 0 196 539**
**DE-A- 2 556 014**
**DE-A- 3 100 173**
**DE-C- 3 121 148**

**PATENT ABSTRACTS OF JAPAN vol. 9, no. 193 (E-334) 1916 09 August 1985, & JP-A-60 O59989**

(73) Patentinhaber: **MANNESMANN Aktiengesellschaft**
**Mannesmannufer 2 Postfach 5501**
**W-4000 Düsseldorf 1(DE)**

(72) Erfinder: **Grüner, Manfred**
**Eichenhang 45**
**W-7900 Ulm(DE)**
Erfinder: **Kunze, Heiko**
**Buchenlandweg 148**
**W-7900 Ulm(DE)**

(74) Vertreter: **Presting, Hans-Joachim, Dipl.-Ing.**
**Meissner & Meissner Patentanwaltsbüro et al**
**Hohenzollerndamm 89**
**W-1000 Berlin 33(DE)**

EP 0 352 397 B1

**Beschreibung**

Die Erfindung betrifft eine Vorrichtung zum Regeln der Geschwindigkeit von pulsbreitenmodulierten Elektromotoren, insbesondere von Gleichstrommotoren, auf deren Welle ein Kodierer angeordnet ist, dessen Signale als Rückmeldesignale im Regelkreis dienen und einem Regler mit Mikroprozessor zugeführt werden, von dem Ausgangs-Steuerleitungen zu einem Verstärker geführt sind und der Verstärker den Elektromotor speist.

Derartige Regelverfahren bzw. Regelvorrichtungen streben eine höchstmögliche Genauigkeit in Abhängigkeit des Sollwertes an.

Eine bekannte Regelvorrichtung zum genauen Regeln der Drehzahl eines Gleichstrommotors, insbesondere eines Matrixdrucker-Gleichstrommotors, sieht vor, daß ein Soll- bzw. Ist-Wert-Zähler auf der Basis einer fest eingegebenen Anzahl von Zählimpulsen arbeitet und daß ein erstes Hilfssignal in Abhängigkeit der Zählflanken des Beginns einer Periodendauer gebildet wird (DE-C2-31 21 148). Hier ist nur ein Regelalgorithmus zugrundegelegt.

Eine andere bekannte Lösung (DE-A1-25 56 014) strebt eine große Ansprechempfindlichkeit schon bei kleinstem Fehler, eine kurze Reaktionszeit und eine schnelle Einregelungszeit mit einem Minimum an Pendelbewegungen an. Hierbei wird ein digitales Steuerungsprinzip auf hardware-Basis verfolgt.

Ein weiters bekanntes Verfahren zur Drehzahlregelung fremderregter Gleichstrommotoren (DE-A1-31 00 173), bei welchem der Motoranker mit Gleichstromimpulsen beaufschlagt wird, sieht vor, daß während der Impulsintervalle die generatorische Ankerspannung gemessen, mit einem Sollwert verglichen und das Vergleichsergebnis zur Auslösung des jeweils nächstfolgenden Gleichspannungsimpulses verwendet wird. Diese Regelung baut nur auf hardware und zwar einem analog-digitalen System auf.

Sämtliche dieser bekannten Vorschläge beruhen ohne Ausnahme auf einer hardware-orientierten Taktung der Motorspannung. Hierbei handelt es sich um unflexible Systeme, die nur einen Regelalgorithmus zulassen. Zudem bedeuten die bekannten Lösungen einen hohen Aufwand an hardware-Komponenten.

Der vorliegenden Erfindung ist die Aufgabe zugrundegelegt, auch bei relativ langsamen Sollgeschwindigkeiten, wie solche bei zu beschleunigenden und abzubremsenden Baugruppen, wie z.B. Druckkopfschlitten in Matrixdruckern, auftreten, Zeit in der CPU zu sparen, um dadurch zu einer schnelleren und genaueren Regelung gegenüber den bekannten Lösungen zu gelangen.

Die gestellte Aufgabe wird bei der eingangs bezeichneten Vorrichtung zum Regeln der Geschwindigkeit von pulsbreitenmodulierten Elektromotoren erfindungsgemäß dadurch gelöst, daß der Regler aus einem an den Kodierer angeschlossenen Mikroprozessor besteht, der über einen Daten- und Adreßbus an einen peripheren Kontroll-Baustein angeschlossen ist und daß der Mikroprozessor über den Daten- und Adreßbus mit Programmen für die Regelung der Aus-Zeit des Impulsverlaufs ladbar ist. Diese Lösung gewährleistet zunächst eine variable Regelung. Der periphere Kontroll-Baustein ermöglicht ferner eine höhere Frequenz der Motorspannung und daher eine geringere Welligkeit des Motorstroms. Dadurch können langsamere Sollgeschwindigkeiten (z.B. für Matrixdrucker) genauer geregelt werden. Von besonderem Vorteil ist jedoch die Kombination der Hardware (CPU, PCU) mit Software (Programme für die Regelung der Aus-Zeit des Impulsverlaufs), weil die Software nicht mehr wie bisher die Taktung der Motorspannung übernehmen muß und dadurch Zeit gewonnen wird für genauere Berechnungen der Regelgrößen. Mit der Erfindung können äußerst geringe Welligkeiten eines im Grunde sägezahnförmigen Stromverlaufes und daher praktisch ein Gleichstromverhalten ermöglicht werden.

In Ausgestaltung der Erfindung ist vorgesehen, daß der periphere Kontroll-Baustein einen binären Zykluszeit-Zähler, ein Zykluszeit-Register und einen Zykluszeit-Vergleicher aufweist, wobei bei Erreichen des festgelegten Zählerstandes über eine Steuerlogik ein Ausgangssignal erzeugbar ist. Aufgrund dieser Hardware-Unterstützung muß sich die Software nicht mehr um das Ein- bzw. Ausschalten der Motorspannung kümmern. Die dadurch freiwerdende Rechenzeit kommt der Qualität des Reglers zugute.

Als weitere Verbesserung der Erfindung wird vorgeschlagen, daß ein in der Steuerlogik befindliches Toggle-Flip-Flop den Gleichstrommotor mit einer reversierenden Bestromung ansteuert, dessen Frequenz im hörbaren Bereich liegt, so daß der Gleichstrommotor als akustischer Signalgeber arbeitet. Hierbei befindet sich der Gleichstrommotor nicht in Bewegung. Diese Frequenz wird über die software eingestellt, und demzufolge können gewünschte Tonfolgen mit minimalem Programmieraufwand erzeugt werden.

Als Weiterentwicklung der Erfindung ist ferner vorgesehen, daß mittels eines Motorsteuer-Registers das Ausgangssignal umpolbar ist, d.h. der Gleichstrommotor gegenbestrombar ist und die Motorspannung zwecks Beeinflussung des Bremsverhaltens des Gleichstrommotors in einem wählbaren Verhältnis getaktet wird. Dadurch kann das Bremsverhalten des Gleichstrommotors mit einem minimalen Programmieraufwand optimal an die gegebenen Verhältnisse (Bremswege, Massenträgheiten, Temperatur und andere Einflüsse) angepaßt werden.

In der Zeichnung ist ein Ausführungsbeispiel der Erfindung schematisch dargestellt und wird nachfolgend näher erläutert. Es zeigen:

Fig. 1     eine Systemdarstellung der Regelvorrichtung mit Gleichstrommotor und Lastbeispiel,

Fig. 2     ein Blockschaltbild des peripheren Kontroll-Bausteins,

Fig. 3     die zu Fig. 2 gehörige Steuerschaltung,

Fig. 4     ein Diagramm einer nichtmodulierten Motorspannung,

Fig. 5     ein Diagramm einer Impulsmodulierung,

Fig. 6     das Diagramm einer geänderten Impulsmodulierung,

Fig. 7     ein Diagramm der Welligkeit des Motorstroms unter gewöhnlichen Bedingungen und

Fig. 8     das Diagramm der Welligkeit des Motorstroms aufgrund einer verdoppelten Taktfrequenz.

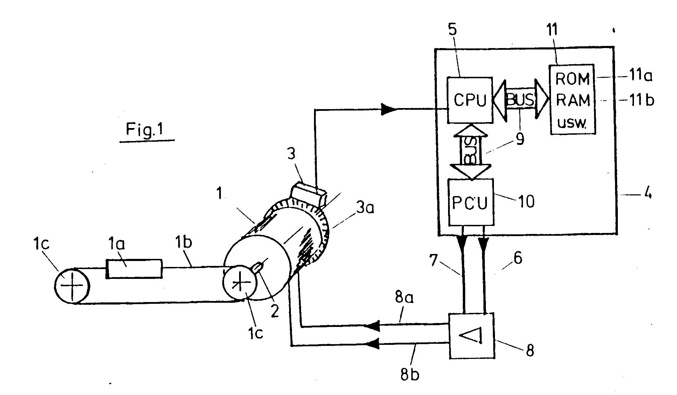

Der pulsbreitenmodulierte Elektromotor 1 (Fig. 1) treibt mit einem der beiden Wellenstümpfe auf der Welle 2 eine Last, die aus einem Druckkopfschlitten 1a, z.B. eines Matrixdruckers, besteht, der in hinund hergehenden Bewegungen über ein Seil 1b und über Seilscheiben 1c angetrieben wird. Die hierbei auftretenden Störgrößen werden aufgrund der Regelvorrichtung ausgeregelt. Auf der gegenüberliegenden Seite des Elektromotors 1 trägt die Welle 2 einen Kodierer 3, dessen Signale als Rückmeldesignale im Regelkreis dienen und einem Regler 4 mit Mikroprozessor 5 zugeführt werden, von dem Ausgangs-Steuerleitungen 6 und 7 (MH1 = Motorbewegung horizontal in einer ersten Drehrichtung; MH2 = Motorbewegung horizontal in einer zweiten Drehrichtung) zu einem Verstärker 8 geführt sind und der Verstärker 8 über Leitungen 8a bzw. 8b die Leistung auf den Elektromotor 1 überträgt.

Der Kodierer 3 generiert den Takt der Ist-Umdrehungszahl mittels einer Schlitzscheibe 3a mit opto-elektronischer Abtastung auf der Motorwelle 2. Hierbei entspricht ein Schlitz dem horizontalen Weg von 1/120" am Druckkopf. Der Kodierer 3 übernimmt somit die Rückmeldung im Regelkreis. Die Aufgabe des Reglers 4 ist es, den Elektromotor 1 mit konstanter Geschwindigkeit zu betreiben. Hierzu liefert der Verstärker 8 die nötige Leistung. Massenträgheitsmomente, z.B. durch den Schlitten 1a, stellen im allgemeinen konstante Lasten dar und verursachen keine Störgrößen. Variable Lasten werden jedoch insbesondere durch unterschiedliche Reibwerte verursacht. Außerdem verändern variable Temperaturen die Momentenkennlinie des Elektromotors 1.

Der Regler 4 setzt sich aus einem Hardware-Elektronikteil sowie aus einem Software-Teil zusammen. Die Hardware besteht aus noch zu erläuternden Registern, Zählern und Vergleicherschaltungen sowie aus der beschriebenen Taktgenerierung zur Rückmeldung im Regelkreis.

Die Software (Programme 11) in Verbindung mit erforderlichen Bausteinen, Mikroprozessor 5, Datenbus 9, einem ROM 11a, einem RAM 11b, übernimmt das Laden der nachstehend beschriebenen Register, wobei dessen Werte von der vorgegebenen Sollgeschwindigkeit, regelungstechnischen Algorithmen sowie mechanischen Konstanten abhängig ist.

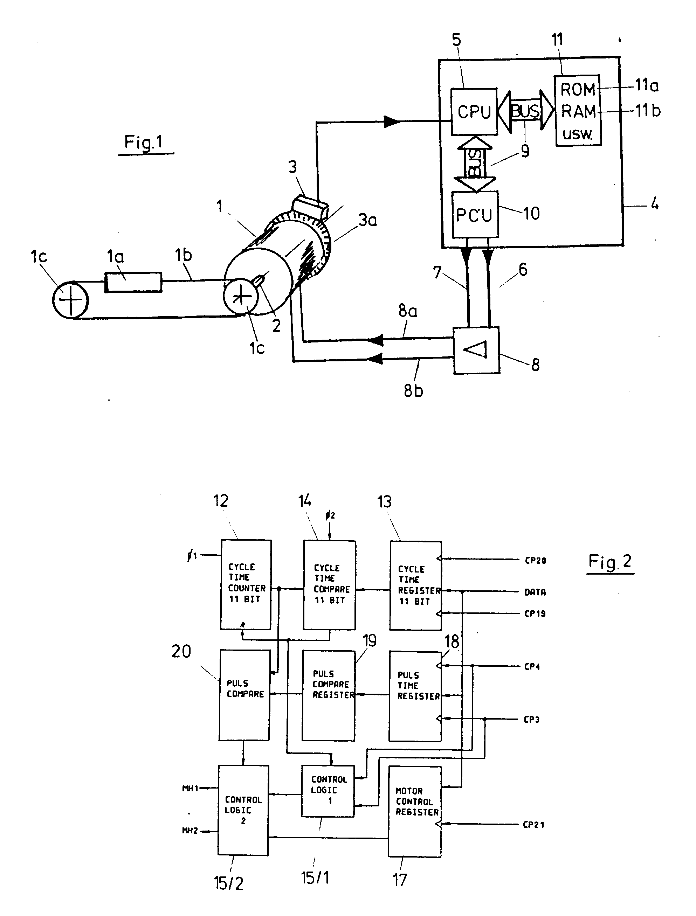

Der periphere Kontroll-Baustein 10 ist nunmehr (teilweise) in Fig. 2 näher dargestellt. Wie aus dem Blockschaltbild ersichtlich ist, besteht die Hardware aus mehreren Funktionskomponenten, die einerseits die Periodendauer und andererseits die Pulsbreite erzeugen sowie die Ausgangssignale entsprechend der Drehrichtung (MH1, MH2) aktivieren oder inaktivieren.

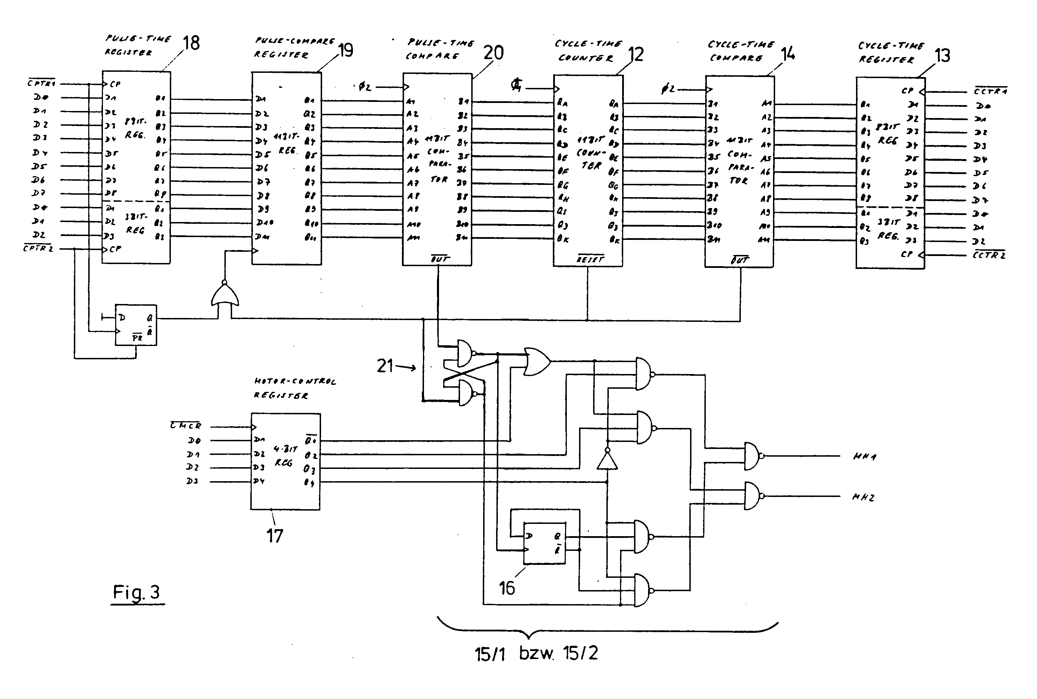

Für die Erzeugung der Periodendauer dient der Zykluszeit-Zähler 12, das Zykluszeit-Register 13 und der Zykluszeit-Vergleicher 14. Das Zykluszeit-Register 13 wird bei einer Größe von 11 Bit und einem 8-Bit-Datenbus mit zwei Zyklen geladen. Das Taktsignal Phi 1 inkrementiert den Zykluszeit-Zähler 12 mit einer Frquenz von z.B. 1 MHz, bis derselbe Wert des Zykluszeit-Registers 13 erreicht ist. Über den Zykluszeit-Vergleicher 14 wird dieser Vorgang erkannt und mit dem Taktsignal Phi 2, welches eine Phasenverschiebung von 180° aufweist, wird der Zykluszeit-Zähler 12 wieder auf Null gesetzt. Gleichzeitig wird mit demselben Signal ein Flip-Flop 21 (Fig. 3) zurückgesetzt, was bedeutet, daß das selektierte Ausgangssignal auf logisch Null gesetzt wird (Steuerlogik 15/2 - Fig. 2).

Zur Impuls- bzw. Pausengenerierung steht ein Impulszeit-Register 18, ein Impuls-Vergleichsregister 19 und ein Impuls-Vergleicher 20 zur Verfügung (Fig. 2 und 3). Im Impulszeit-Register 18 ist der Pausenwert eingeschrieben, und das Impulszeit-Register 18 wird wie das Zykluszeit-Register 13 mit zwei Zyklen geladen. Dieser wert wird mit jedem Periodenanfang in das Impuls-Vergleichsregister 19 übertragen (Steuerlogik 15/1), damit keine falschen Impulsbreiten zustandekommen. Sofern der Inhalt des Zykluszeit-Zählers 12 gleich dem Inhalt des Impuls-Vergleichsregisters 19 ist, wird dieser Zustand über den Impulszeit-Vergleicher 20 erkannt und ein Impuls-Flip-Flop 21 gesetzt. Dieser Vorgang hat wiederum zur Folge, daß das selektierte Ausgangssignal auf logisch 1 gesetzt wird (Steuerlogik 15/2).

Das aus vier Bit bestehende Motor-Steuer-Register 17 ermöglicht folgende aus der Tabelle ersichtlichen Ausgangssignale MH1 und MH2:

Motor-Steuerregister 17:

| Bit 1 | Bit 2 | Bit 3 | Bit 4 | MH1 | MH2 |
|:-----:|:-----:|:-----:|:-----:|:----:|:----:|
| 0 | 0 | 0 | 0 | 0 | 0 |
| 1 | 0 | 0 | 0 | 1 | 0 |
| 0 | 1 | 0 | 0 | 0 | 1 |
| 1 | 1 | 0 | 0 | 1 | 1 |
| 0 | 0 | 1 | 0 | 0 | 0 |
| 1 | 0 | 1 | 0 | _⊓_ | 0 |
| 0 | 1 | 1 | 0 | 0 | _⊓_ |
| 1 | 1 | 1 | 0 | _⊓_ | _⊓_ |
| X | X | X | 1 | Toggle | Toggle |

Das in der Steuerlogik 15/2 befindliche Toggle-Flip-Flop 16 besitzt eine weitere Funktion, die es ermöglicht, den Elektromotor 1, insbes. einen Gleichstrommotor, mit einer reversierenden Bestromung anzusteuern, und zwar mit einer Frequenz, die im hörbaren Bereich liegen muß, um als akustischer Signalgeber verwendet werden zu können, ohne dabei eine Bewegung auszuführen.

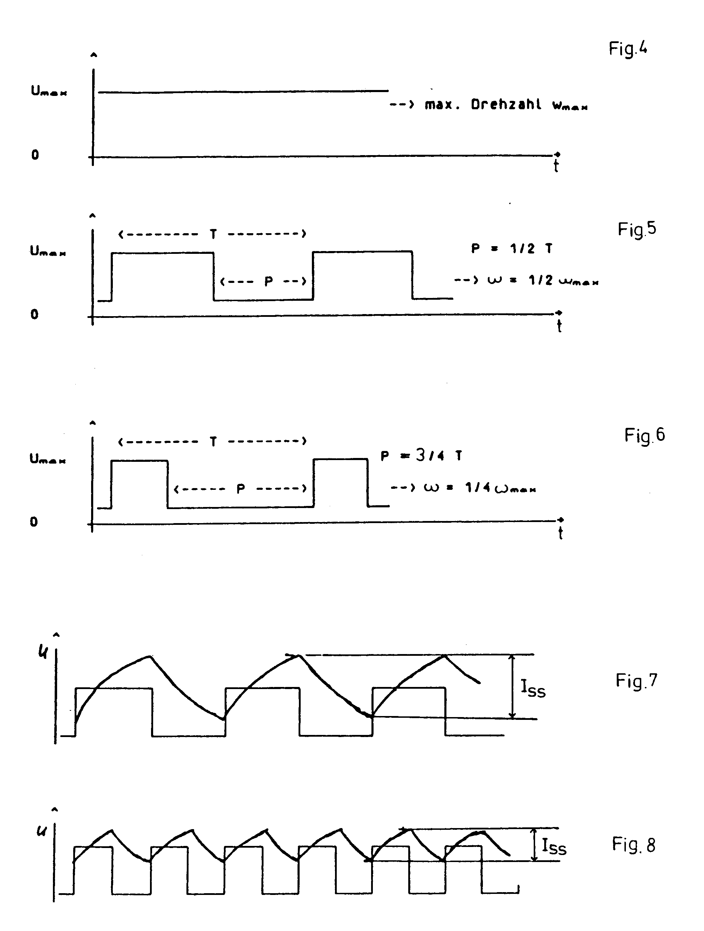

Aus der vorstehenden Hardware-Beschreibung ist ersichtlich, daß es sich um eine pulsbreitenmodulierte Regelung handelt. Die Pulsbreiten-Regelung im allgemeinen erlaubt es, den Mittelwert der Spannung von Umax bis Null zu variieren. Dementsprechend verändert sich auch die Drehzahl des Elektromotors 1, der mit dieser gepulsten Spannung U betrieben wird. Gemäß Fig. 4 stellt sich die maximale Drehzahl des Elektromotors 1 bei der Maximalspannung Umax als horizontale Zeitgerade dar.

Fig. 5 zeigt nunmehr eine gepulste Maximalspannung Umax mit einer Zeit T und einer Pause = 1/2 T. Dementsprechend ist die Drehgeschwindigkeit Omega = 1/2 Omega max, bei sonst gleichen Bedingungen.

Fig. 6 zeigt ein Impulsdiagramm mit einer Zykluszeit T, wobei die Pausenzeit P = 3/4 T beträgt, so daß die Drehgeschwindigkeit Omega = 1/4 Omega max beträgt, bei sonst gleichen Bedingungen. Die Zykluszeit T entspricht dem Inhalt des Zykluszeit-Registers 13. Die Pausenzeit P entspricht dem Inhalt des Impulszeit-Registers 18. In beiden Registern ist die Zeit in Mikrosekunden vorausgesetzt bei einer Frequenz von Phi 1 = 1 MHz.

Das Ausführungsbeispiel behandelt eine Regelvorrichtung für einen Matrixnadeldrucker. Für diesen Fall liegen folgende Bedingungen vor: Die Regelvorrichtung regelt die Geschwindigkeit einer vorgegebenen Sollgeschwindigkeit zwischen 200 Mikrosekunden und 3000 Mikrosekunden pro 1/120" (Schlitzabstand des Kodierers 3). Diese verlangte Sollgeschwindigkeit muß innerhalb des vorgegebenen Weges (einer Beschleunigungsstrecke) erreicht werden. Andererseits muß von der vorgegebenen Sollgeschwindigkeit innerhalb des vorhandenen Weges abgebremst werden. Beide Wege sind Anlauf- bzw. Auslaufwege.

Das Ergebnis der Software-Routinen muß es deshalb sein, die vorhandenen Register den Anforderungen entsprechend zu beschreiben (Motor-Steuer-Register 17, Zykluszeit-Register 13 und Impulszeit-Register 18). Das Motor-Steuer-Register 17 startet oder stoppt die Bewegung des Motors prinzipiell. Auf die Geschwindigkeit hat das Motor-Steuer-Register 17 keinen Einfluß, jedoch auf die Drehrichtung. Das Zykluszeit-Register 13 beeinflußt mit seinem Inhalt die Welligkeit des Motorstromes sowie insbesondere den Einfluß des Zykluszeit-Zählers 12.

Gemäß Fig. 7 ist über der Zeit die Motorspannung aufgetragen, wobei die Anstiegs- und Abfallzeiten des Motorstroms Iss durch die elektrische Zeitkonstante des Gleichstrommotors 1 bestimmt werden.

Gemäß Fig. 8 ist erkennbar, daß der Motorstrom Iss bei doppelter Taktfrequenz der Motorspannung einen in etwa gleichen Mittelwert einnimmt, wodurch die Stromspitzen niedrigere Zähne aufweisen. Bei gleichbleibendem Spannungsmittelwert (Vergleich der Figuren 7 und 8) kann somit durch entsprechende Wahl des Zykluszeit-Registers 13 ein Gleichstromverhalten erzeugt werden. Dies ist für die Geschwindigkeitsregelung von großer Bedeutung. Im Gegensatz dazu darf der Inhalt des Zykluszeit-Registers 13 nicht zu klein gewählt werden, da es sonst zu hohen Schaltverlusten in den Treibern der Endstufe kommt. Die Grenzfrequenz der Treiber muß also ebenfalls beachtet werden.

Der Inhalt des Zykluszeit-Registers 13 hat einen bestimmenden Einfluß auf die Wirkung der Regelgröße des Impulszeit-Registers 18. Dies möge ein Beispiel verdeutlichen:

Zykluszeit-Register 13 = 300 Mikrosekunden;

Impulszeit-Register 18 = 100 Mikrosekunden - Umittel = 2/3 Umax;

Zykluszeit-Register 13 = 200 Mikrosekunden;

Impulszeit-Register 18 = 100 Mikrosekunden - Umittel = 1/2 Umax.

Trotz gleichem Inhalt des Impulszeit-Registers 18 stellen sich also unterschiedliche Ausgangsspannungen ein. Durch Kombination des Zykluszeit-Registers 13 und des Impulszeit-Registers 18 gibt es theoretisch unendlich viele Kombinationen, um eine bestimmte Ausgangsspannung einzustellen. Bei fest vorgegebenem Zykluszeit-Register 13 existiert jedoch nur eine einzige Möglichkeit.

Der Inhalt des Impulszeit-Registers 18 stellt die eigentliche Regelgröße dar. Die Regelgrößen-Grenzen sind: Null kleiner als der Inhalt des Impulszeit-Registers 18 kleiner als der Inhalt des Zykluszeit-Registers 13. Die verwendeten Regelalgorithmen, nach denen das Impulszeit-Register 18 berechnet wird, ist von mehreren Faktoren abhängig:

Von der verlangten Sollgeschwindigkeit,

vom Inhalt des Zykluszeit-Registers 13,

von der verlangten Genauigkeit und Regelgeschwindigkeit,

von den zur Verfügung stehenden Arithmetik-Routinen,

von der erlaubten Rechenzeit,

von den Störgrößen.

Die Regelalgorithmen für das beschriebene Ausführungsbeispiel basieren auf folgenden Überlegungen:

Die Aus-Zeit-Bestimmung für das gesteuerte System geht von der theoretischen Annahme aus, daß keine Störgrößen vorhanden sind sowie die Lastverhältnisse konstant sind. Daran anknüpfend kann für die verlangte Sollgeschwindigkeit ein zum Zykluszeit-Register 13 passender Wert des Impulszeit-Registers 18 gefunden werden, mit dem im gesteuerten Betrieb eine reine Vorgabe für das Zykluszeit-Register 13 und das Impulszeit-Register 18 (ohne Rückmeldung durch den Kodierer 3) die Sollgeschwindigkeit eingehalten werden kann. Diese Grund-Aus-Zeiten müssen für jede Geschwindigkeit ermittelt werden. Diese Ermittlung kann durch praktische Versuche erfolgen, indem die Zykluszeit = Sollzeit vorgegeben wird und die Impulszeit solange verändert wird, bis sich die verlangte Sollzeit (Geschwindigkeit) einstellt. Da es sich hier um ein lineares System handelt, genügt es, diese Aus-Zeit-Bestimmung für wenige Geschwindigkeiten durchzuführen und aus den Ergebnissen die Geradengleichung für das System zu bestimmen. Das Ergebnis lautet sodann: Aus-Zeit = (a mal Sollzeit + b) + I.

Hierin bedeuten:

a = die Steigung der Geraden und

b = der Schnittpunkt mit der Ordinate (b ist die Geschwindigkeit, die sich bei Umax einstellt).

I = Integralanteil; P = Proportionalanteil

Wie genau diese Gleichung software-mäßig realisiert werden kann, hängt von den zur Verfügung stehenden Arithmetik-Routinen und der erlaubten Rechenzeit ab. Es genügt jedoch eine gute Näherung, da sich die Regelgröße um diese Aus-Zeit herum bewegt und neben Lastschwankungen auch Fehler in der Berechnung der Grund-Aus-Zeit ausgeregelt werden.

Für die Aus-Zeit-Bestimmung wurde die Zykluszeit = Sollzeit gewählt. Besonders bei langsamen Geschwindigkeiten würde dieses Verfahren jedoch zu großen Zykluszeiten und damit zu großen Stromschwankungen führen. Dies würde den großen Vorteil der Hardware-Unterstützung zunichte machen. Die Zykluszeit wird daher nach folgenden Erfahrungswerten eingestellt: Bei entsprechenden Sollzeiten pro 1/120" von 200 bis 3000 Mikrosekunden ergeben sich für die Zyluszeit Werte zwischen 100 und 400 Mikrosekunden. Das Verhältnis Zykluszeit/Sollzeit wird als Faktor z angesetzt.

In dem vorbeschriebenen Anwendungsfall wurde ein Proportional-Integral-Regler realisiert, der nach folgender Gleichung arbeitet:

Regelgröße (Impulszeit-Register) = (Aus-Zeit + P + I) mal z.

Die Regelung wird interrupt gesteuert, d. h. pro Schlitz der Taktscheibe 3a wird hardware-mäßig ein Interrupt im laufenden Programm erzeugt. In diesem Interrupt wird die verstrichene Zeit seit dem letzten Interrupt gemessen und daraus die neue Regelgröße berechnet. Zur Messung der verstrichenen Zeit wird ein Zeitglied verwendet, das in dem Mikroprozessor 5 integriert ist.

Hierin sind folgende Parameter von Bedeutung:

Die Berechnung der Grund-Aus-Zeit wurde bereits beschrieben. Sobald diese Aus-Zeit bei Störgrößen nicht zur gewünschten Geschwindigkeit führt, kommen der P- und der I-Anteil zum Tragen.

Der P-Teil (Proportional-Anteil) setzt sich zusammen aus Fehler mal k. Fehler = Sollzeit minus Istzeit.

Der Verstärkungsfaktor k sorgt für die entsprechende Gewichtung des Proportional-Anteils und verhin-

EP 0 352 397 B1

dert dadurch unstabile Verhältnisse (z.B. Schwingungen).

Der P-Anteil ist zuständig zum schnellen Ausregeln großer Geschwindigkeitsdifferenzen, wie sie insbesondere beim Beschleunigen und Bremsen auftreten. Bei größeren Lastschwankungen sowie ungenau berechneten Grund-Aus-Zeiten sind der Genauigkeit des P-Reglers jedoch gewisse Grenzen gesetzt.

Dagegen sorgt der Integralteil für eine andauernde Genauigkeit des Reglers auch bei dauernden Laständerungen, wie sie bei Serienprodukten immer zu erwarten sind.

Der I-Teil startet mit dem Wert 0 und erhöht/erniedrigt sich; je nach Positiv-/Negativ-Fehler in jedem Interrupt um den Wert Ioffset

$$I = I +/- Ioffset$$

Ioffset wird wie k durch Versuche ermittelt.

| Sollzeit | Ioffset |
|---|---|
| 200 - 1023 us | 0.5 $\mu$s |
| 1024 - 1535 us | 1 $\mu$s |
| 1536 - 2303 us | 2 $\mu$s |
| 2304 - 3071 us | 3 $\mu$s |

In diesem Anwendungsfall wird die Bewegung des Motors sehr oft mit unterschiedlichen Sollgeschwindigkeiten gestartet und wieder gestoppt. Bei vorhandenen Störgrößen muß deshalb der I-Teil bei jedem Durchgang erneut den Verhältnissen entsprechend modifiziert werden. Um diese Regelaktivitäten möglichst gering zu halten, wird ein spezielles Verfahren angewandt:
Sobald sich die Istgeschwindigkeit im Toleranzbereich zur Sollgeschwindigkeit befindet, wird der aktuelle I-Wert gespeichert. Wird die Bewegung mit derselben Sollgeschwindigkeit erneut gestartet, so wird dieser letzte I-Wert auf die vorstehend berechnete Grundauszeit aufaddiert. Damit ergibt sich für die Berechnung der Grundauszeit die vorgenannte Gleichung.

Ein vorteilhaftes Verfahren zum Abbremsen des Elektromotors 1 besteht im Kurzschließen desselben und wurde bisher auch ohne die beschriebene Hardware-Unterstützung angewandt. Dieses Bremsverfahren setzt jedoch voraus, daß der zur Verfügung stehende Bremsweg auch ausreichend ist, um den Elektromotor 1 im Kurzschlußverfahren zum Stillstand zu bringen.

Andererseits besteht jedoch auch die Möglichkeit, die Bestromungsrichtung des Elektromotors 1 umzupolen, d.h. den Motor gegenzubestromen. Wird dazu jedoch die Spannung Umax verwendet, so muß mit sehr großen Stromspitzen gerechnet werden, was in extremen Fällen zur Zerstörung der Treiberstufe führen könnte.

Die Hardware-Unterstützung stellt nun in Form der beschriebenen Register ein vorteilhaftes Instrument zur Verfügung, um die Motorspannung in einem beliebigen Verhältnis zu takten und somit den Motorstrom bei Gegenbestromung mit minimalem Software-Aufwand in den erlaubten Grenzen zu halten. Da das Bremsvermögen des Elektromotors 1 auch beim Gegenbestromen von äußeren Einflüssen, wie Trägheitsmomente, Reibwerte, Temperatur u.dgl., abhängig ist, kann die Bestimmung der Regelgröße der Impulszeit (des Impulszeit-Registers 18) durchaus nach regelungstechnischen Algorithmen erfolgen, soweit dies notwendig ist.

**Patentansprüche**

1. Vorrichtung zum Regeln der Geschwindigkeit von pulsbreitenmodulierten Elektromotoren (1), insbesondere von Gleichstrommotoren, auf deren Welle ein Kodierer (3) angeordnet ist, dessen Signale als Rückmeldesignale im Regelkreis dienen und einem Regler (4) mit Mikroprozessor (5) zugeführt werden, von dem Ausgangs-Steuerleitungen (6, 7) zu einem Verstärker (8) geführt sind und der Verstärker (8) den Elektromotor (1) speist,
dadurch gekennzeichnet,
daß der Regler (4) aus einem an den Kodierer (3) angeschlossenen Mikroprozessor (5) besteht, der über einen Daten- und Adreßbus (9) an einen peripheren Kontroll-Baustein (10) angeschlossen ist und daß der Mikroprozessor (5) über den Daten- und Adreßbus (9) mit Programmen (11) für die Regelung der Aus-Zeit des Impulsverlaufs ladbar ist.

2. Vorrichtung nach Anspruch 1,

6

dadurch gekennzeichnet,
daß der periphere Kontroll-Baustein (10) einen binären Zykluszeit-Zähler (12), ein Zykluszeit-Register (13) und einen Zykluszeit-Vergleicher (14) aufweist, wobei bei Erreichen des festgelegten Zählerstandes über eine Steuerlogik (15/1 bzw. 15/2) ein Ausgangssignal (MH1,MH2) erzeugbar ist.

3. Vorrichtung nach den Ansprüchen 1 und 2,
dadurch gekennzeichnet,
daß ein in der Steuerlogik (15) befindliches Toggle-Flip-Flop (16) den Gleichstrommotor (1) mit einer reversierenden Bestromung ansteuert, dessen Frequenz im hörbaren Bereich liegt, so daß der Gleichstrommotor (1) als akustischer Signalgeber arbeitet.

4. Vorrichtung nach den Ansprüchen 1 bis 3,
dadurch gekennzeichnet,
daß mittels eines Motorsteuer-Registers (17) das Ausgangssignal (MH1,MH2) umpolbar ist, d.h. der Gleichstrommotor (1) gegenbestrombar ist und die Motorspannung zwecks Beeinflussung des Bremsverhaltens des Gleichstrommotors (1) in einem wählbaren Verhältnis getaktet wird.

## Claims

1. A device for controlling the speed of pulse width-modulated electric motors (1), in particular of direct current motors, on the shaft of which an encoder (3) is located, the signals of which serve as repeating signals in the control circuit and are fed to a controller (4) with microprocessor (5), from which output control lines (6, 7) pass to an amplifier (8) and the amplifier (8) feeds the electric motor (1), characterised in that the controller (4) consists of a microprocessor (5) connected to the encoder (3), which microprocessor is connected via a data and address bus (9) to a peripheral control module (10), and that the microprocessor (5) can be loaded with programs (11) for controlling the off-time of the pulse cycle via the data and address bus (9).

2. A device according to Claim 1, characterised in that the peripheral control module (10) has a binary cycle time counter (12), a cycle time register (13) and a cycle time comparator (14), whereby an output signal (MH1,MH2) can be generated via a control logic (15/1 or 15/2) when the set count is reached.

3. A device according to Claims 1 and 2, characterised in that a toggle-flip-flop (16) located in the control logic (15) drives the direct current motor (1) with a reversing current supply?, the frequency of which is in the audible range, so that the direct current motor (1) operates as an acoustic signal transmitter.

4. A device according to Claims 1 to 3, characterised in that the output signal (MH1,MH2) can undergo a change in polarity by means of a motor control register (17), i.e. the direct current motor (1) can be supplied with current in the opposite direction and the motor voltage is regulated in a selectable ratio for influencing the braking behaviour of the direct current motor (1).

## Revendications

1. Dispositif pour régler la vitesse de moteurs électriques (1) à modulation d'impulsions en durée, en particulier de moteurs à courant continu, sur l'arbre desquels est agencé un codeur (3) dont les signaux servent de signaux en retour dans le circuit de réglage et sont amenés à un régulateur (4) à microprocesseur (5), duquel des liaisons de commande de sortie (6,7) sont reliées à un amplificateur (8) et l'amplificateur (8) alimente le moteur électrique (1),
caractérisé en ce que le régulateur (4) est constitué d'un microprocesseur (5) raccordé au codeur (3), et raccordé à une unité de contrôle périphérique (10) par l'intermédiaire d'un bus d'adresses et de données (9), et en ce que le microprocesseur (5), par l'intermédiaire du bus d'adresses et de données (9), peut être chargé de programmes (11) pour régler le temps "arrêt" de la courbe des impulsions.

2. Dispositif selon la revendication 1,
caractérisé en ce que l'unité de contrôle périphérique (10) présente un compteur de temps de cycle binaire (12), un enregistreur de temps de cycle (13), et un comparateur de temps de cycle (14), un signal de sortie (MH1,MH2) pouvant être créé, lorsque l'état déterminé du compteur est atteint, par l'intermédiaire d'une logique de commande (15/1 ou 15/2).

7

3.  Dispositif selon les revendications 1 et 2,
    caractérisé en ce qu'un déclencheur (16) se trouvant dans la logique de commande (15) excite le moteur à courant continu (1) par une alimentation de courant réversible dont la fréquence se trouve dans le domaine audible, de sorte que le moteur à courant continu (1) travaille en tant que transmetteur de signaux acoustiques.

4.  Dispositif selon les revendications 1 à 3,
    caractérisé en ce que, au moyen d'un registre de commande du moteur (17), le signal de sortie (MH1,MH2) peut être inversé, c'est-à-dire que le moteur à courant continu (1) est alimenté à contre-courant, et la tension du moteur, en vue d'influencer le comportement au freinage du moteur à courant continu (1), est synchronisée en un rapport qui peut être choisi.

EP 0 352 397 B1

Fig.1

Fig.1

Fig. 2

Fig. 3

15/1 bzw. 15/2

EP 0 352 397 B1

Fig.4

$U_{max}$ ————————————————— --> max. Drehzahl $w_{max}$

0 ————————————————————— t

Fig.5

$U_{max}$ <-------- T -------->     P = 1/2 T

<--- P -->     --> $\omega$ = 1/2 $\omega_{max}$

0 ————————————————————— t

Fig.6

$U_{max}$ <-------- T -------->     P = 3/4 T

<----- P ----->     --> $\omega$ = 1/4 $\omega_{max}$

0 ————————————————————— t

$\hat{u}$

$I_{SS}$

Fig.7

$\hat{u}$

$I_{SS}$

Fig. 8